# EUROPÄISCHE PATENTSCHRIFT

(11) **EP 2 834 003 B1**
(45) Veröffentlichungstag und Bekanntmachung des Hinweises auf die Patenterteilung: **01.04.2020**
(21) Anmeldenummer: 13713881.4
(22) Anmeldetag: 02.04.2013
(51) Int. Cl.: B01J 29/74, G21C 9/06, G21C 19/317

(54) **VERWENDUNG EINES WASSERSTOFFOXIDATIONSKATALYSATORS**
USE OF A HYDROGEN OXIDATION CATALYST
UTILISATION D'UN CATALYSEUR D'OXYDATION D'HYDROGÈNE

(30) Priorität: 02.04.2012 DE 102012006541
(43) Veröffentlichungstag der Anmeldung: 11.02.2015
(73) Patentinhaber: Clariant Produkte (Deutschland) GmbH, 65929 Frankfurt am Main (DE)
(72) Erfinder: MÜLLER, Patrick, 83209 Prien am Chiemsee (DE); TISSLER, Arno, 93105 Tegernheim (DE); KLOSE, Frank, 83026 Rosenheim (DE); ALTHOFF, Roderik, 83024 Rosenheim (DE); BÜTTNER, Olaf, 83059 Kolbermoor (DE)
(74) Vertreter: Graser, Konstanze
(86) Internationale Anmeldenummer: PCT/EP2013/056943
(87) Internationale Veröffentlichungsnummer: WO 2013/150030

(56) Entgegenhaltungen:
- EP-A1- 0 466 396
- US-A- 5 228 979
- US-A1- 2011 268 242

## Beschreibung

Die vorliegende Erfindung betrifft die Verwendung eines Katalysators, umfassend einen Zeolithen, der mindestens ein katalytisch aktives Edelmetall oder eine Verbindung davon enthält, wobei der Zeolith ein hydrophober Zeolith vom Strukturtyp BEA ist, als Wasserstoffoxidationskatalysator.

In Kernkraftwerken werden alle Bauteile, die mit radioaktiven Stoffen in Berührung kommen, in der sogenannten "Nuklearen Insel" (Nuclear Island) zusammengefasst. Diese umfasst den Sicherheitsbehälter (Inneres Containment) mit Primärkreislauf, dem Flutbecken und dem Kernfänger. Im oberen Teil des Sicherheitsbehälters können katalytische Wasserstoffoxidationssysteme installiert sein, die den Wasserstoffanteil in der Atmosphäre begrenzen sollen, um Wasserstoffexplosionen zu verhindern.

In Kernkraftwerken, insbesondere in Druck- und Siedewasserreaktoren, aber auch in den Abklingbecken und allen anderen Bereichen, wo Wasser in Kontakt mit Kernbrennstäben kommt, können durch Radiolyse von Wasser an der Oberfläche heißer Brennstäbe signifikante Mengen an Wasserstoff und Sauerstoff entstehen. Auch an anderen Kontaktflächen zwischen heißem Metall und Wasser(dampf) ist insbesondere in den Komponenten des Primärkreislaufes eine Wasserzersetzung zu Wasserstoff und Sauerstoff möglich. Sofern sich Wasserstoff in den Gebäuden der Nuklearen Insel anreichert, können explosive Atmosphären entstehen, die im Falle der Explosion zur Zerstörung von Reaktordruckbehälter und anderen Bereichen des Primärkreislaufs führen können, wobei dann mit der Freisetzung größerer Mengen radioaktiven Materials zu rechnen ist. Ein Beispiel für ein solches als Super-GAU einzustufendes Ereignis ist die Nuklearkatastrophe von Fukushima.

Um derartige Katastrophen zu vermeiden, werden in letzter Zeit Kernkraftwerke mit Wasserstoffoxidationssystemen ausgestattet bzw. nachgerüstet. Dabei handelt es sich um passive Systeme, deren Aufgabe es ist, bei Raumtemperatur unter Atmosphärenbedingungen gebildeten Wasserstoff katalytisch wieder zu Wasserdampf zu oxidieren und so die Entstehung explosiver Atmosphären zu vermeiden. Dieser Prozess muss ohne aktive Hilfselemente wie Heizungen, Gebläse usw. insbesondere auch bei einem Ausfall der Notstromversorgung selbsttätig an- und ablaufen und sich selbst weiter aufrechterhalten. Das Anspringen der Reaktion muss dabei für frisches Katalysatormaterial, wie auch für solches, welches gelagert oder den im Sicherheitsbehälter herrschenden Betriebszuständen ausgesetzt war, sicher erfolgen. Auch für Abklingbecken und Brennelementbehälter können Wasserstoffoxidationssysteme verwendet werden, die dafür sorgen, dass der freigesetzte Wasserstoff zu Wasser abreagieren kann, bevor es zu einer explosiven Konzentration kommt. D.h. dieser Katalysator ist sowohl für aktive wie auch für stillgelegte Kernkraftwerke, Wiederaufbereitungsanlagen und Brennelementlager geeignet.

Für diesen Zweck ist ein mit 0,4-0,5 Gew.-% Pd dotierter Al₂O₃-Schüttgutkatalysator bekannt, der in einem aufwendigen Verfahren mit siliziumorganischen Verbindungen hydrophobiert wird, damit auch unter hohen Wasserdampfkonzentrationen, wie sie in einem Störfall mit Temperaturanstieg zwangsläufig auftreten, die Wasserstoffoxidationskatalyse ablaufen kann. Diese Herstellmethode ist teuer und weist schwerwiegende technische Probleme im Herstellungsprozess auf. Die hydrophobierende Schicht zersetzt sich zudem ab ca. 180 °C. Dies ist insoweit unbefriedigend, als dass sich im Normalbetrieb aus der Atmosphäre des Sicherheitsbehälters organische Stoffe auf dem Katalysator absetzen können, die die Wirksamkeit des Katalysators durch Blockierung der Oberfläche herabsetzen würden. Eine Regeneration des Katalysators durch Abbrennen der organischen Stoffe ist ohne Zerstörung der hydrophobierenden Schicht nicht möglich. Daher bleibt nur der Austausch des Katalysators im Rahmen einer Revision, verbunden mit hohen Kosten für die Neubeschaffung und Entsorgung des Altkatalysators. Weiterhin kann eine Zersetzung der hydrophobierenden Schicht durch die dabei auftretende Exothermie gerade den Zündfunken für eine Explosion liefern.

Desweiteren sind Wasserstoffoxidationskatalysatoren auf Basis von Blechen mit rein anorganischen Beschichtungen (beispielsweise Pd auf Al₂O₃) bekannt, die nebeneinander hängend verbaut werden. Dadurch sinken der Druckverlust und die Gasgeschwindigkeit im Wasserstoffoxidationssystem. Dies ist wichtig, da das Anspringen passiv über Autokonvektion erfolgen muss. Zum anderen können die Bleche durch Abbrennen bei der Revision regeneriert werden. Nachteilig ist jedoch, dass auf Grund der Hydrophilie des Al₂O₃ relativ hohe Mengen an Edelmetall benötigt werden, um dem inhibierenden und deaktivierenden Effekt einer hohen Wasserbeladung entgegenzuwirken und die Funktionsfähigkeit des Wasserstoffoxidationssystems sicherzustellen.

Die Offenlegungsschrift EP 0466396 A1 offenbart ein Verfahren zum Aufbringen einer hochkristallinen Siliziumdioxid-Form, zum Beispiel Silicalit, auf eine Trägerstruktur mit einer geringen Wärmekapazität, wie ein Sieb oder eine Metalloberfläche. Eine Aufschlämmung eines fein verteilten Zeolithen mit einem hohen Siliziumdioxid-Anteil und ein Silikon- oder Polytetrafluorethyl-Binder wird auf die Trägerstruktur aufgetragen. Optional wird entweder vor oder nach Auftragen des Zeolithen mit dem hohen Siliziumdioxid-Anteil auf die Trägerstruktur ein Edelmetallkatalysator auf den Zeolithen mit dem hohen Siliziumdioxid-Anteil aufgebracht. Die nach diesem Verfahren beschichteten Trägerstrukturen können dazu verwendet werden, um die flammenlose Verbrennung von Wasserstoff oder Kohlenwasserstoffgasen mit geeigneten Mengen von Luft und Sauerstoff zu katalysieren, sofern ein Edelmetallkatalysator angewendet wird oder als eine Absorber-Struktur bei Abwesenheit des Edelmetallkatalysators.

Aufgabe der Erfindung ist es daher, einen Katalysator bereitzustellen, der in Wasserstoffoxidationssystemen auch bei hohen Wasserdampfgehalten eingesetzt werden kann, eine gute Regenerierbarkeit besitzt und sich zudem bei gleicher Wirkungseffizienz durch eine geringere Edelmetalldotierung auszeichnet.

Diese Aufgabe wird gelöst durch die Verwendung eines Katalysators zur Wasserstoffoxidation nach Anspruch 1.

Die Erfindung betrifft die Verwendung eines Katalysators zur Wasserstoffoxidation (Wasserstoffoxidationskatalysator), der einen Zeolithen, der mindestens ein katalytisch aktives Edelmetall oder eine Verbindung davon enthält, wobei der Zeolith ein hydrophober Zeolith vom Strukturtyp BEA ist, umfasst.

Eine andere Ausführungsform betrifft die Verwendung eines Wasserstoffoxidationskatalysators, umfassend einen Zeolithen, der mindestens ein katalytisch aktives Edelmetall oder eine Verbindung davon enthält, wobei der Zeolith ein hydrophober Zeolith vom Strukturtyp BEA ist, als Oxidationskatalysator und/oder zur Wasserstoffoxidation in Kernkraftwerken, Wiederaufbereitungsanlagen oder Brennelementlager.

Dies entspricht einem Verfahren zur Wasserstoffoxidation in Kernkraftwerken, Wiederaufbereitungsanlagen oder Brennelementlager bei dem Wasserstoff und Sauerstoff mit einem Wasserstoffoxidationskatalysator, umfassend einen Zeolithen, der mindestens ein katalytisch aktives Edelmetall oder eine Verbindung davon enthält, wobei der Zeolith ein hydrophober Zeolith vom Strukturtyp BEA ist, in Kontakt gebracht werden.

Überraschenderweise ermöglichen die erfindungsgemäßen Ausführungsformen des Wasserstoffoxidationskatalysators, dass der Katalysator bereits mit niedrigen Edelmetallkonzentrationen eine hervorragende Aktivität in der Oxidation von Wasserstoff und zudem eine ausgezeichnete Regenerierbarkeit aufweist. Dieser Effekt ist zum Beispiel dann zu beobachten, wenn bereits der bei der Herstellung eingesetzte, nicht mit Edelmetall beladene bzw. undotierte Zeolith vom Strukturtyp BEA an sich hydrophob ist, d.h. wenn er eine hohe "intrinsische" Hydrophobie besitzt, die in einigen Beispielen darüber hinaus auch bei hohen Temperaturen bis zur Zerstörung der Zeolithstruktur oberhalb von 1000 °C erhalten bleibt. Der Katalysator kann dabei sowohl als Schüttgut verwendet werden, als auch auf Waben oder Bleche aufgebracht werden. Dadurch ist es möglich, einen Wasserstoffoxidationskatalysator bereitzustellen, der sich aufgrund der niedrigen Edelmetallbeladung durch einen vorteilhaften Beschaffungspreis auszeichnet.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen. Es zeigen:
- Fig. 1: das Zündverhalten der Ausführungsbeispiele im Wasser-stoffzündtest (0,67 % H₂ und 0,1 % H₂O in Luft; und
- Fig. 2: das Zündverhalten des Vergleichsbeispiels im Wasser-stoffzündtest (0,67 % H₂ und 0,1 % H₂O in Luft).

In der nachfolgenden Beschreibung wird der Wasserstoffoxidationskatalysator auch einfach Katalysator genannt. Zudem werden in der folgenden Beschreibung die Begriffe Zeolith und Zeolithmaterial synonym verwendet.

Ferner werden die Ausführungsformen der Erfindung im Folgenden anhand eines Platin oder Platin und Palladium enthaltenden hydrophoben Zeolithen vom Strukturtyp BEA beschrieben, ohne die Erfindung auf diese Edelmetalle zu begrenzen.

Der Begriff "umfassend" beinhaltet in Ausführungsformen "im Wesentlichen bestehend aus" oder "bestehend aus" und kann durch diese ersetzt werden. Für grammatikalische Abwandlungen des Wortes "umfassend" gilt dies entsprechend. Ferner gilt hier für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

In einer Ausführungsform wird ein Wasserstoffoxidationskatalysator bereitgestellt, umfassend einen Zeolithen, der mindestens ein katalytisch aktives Edelmetall oder eine Verbindung davon enthält, wobei der Zeolith ein hydrophober Zeolith vom Strukturtyp BEA ist. Hydrophobe Zeolithe vom Strukturtyp BEA können sich dabei durch einen hohen SiO₂-Anteil auszeichnen, der beispielsweise 94 Gew.-% und bevorzugt 98 Gew.-% überschreitet. Der Begriff "ein katalytisch aktives Edelmetall oder eine Verbindung davon" kann im Rahmen der Erfindung auch als eine Vorstufe des katalytisch aktiven Edelmetalls oder eine Verbindung einer Vorstufe des katalytisch aktiven Edelmetalls verstanden werden oder eine solche umfassen.

Überraschenderweise ermöglichen die erfindungsgemäßen Ausführungsformen des Katalysators, dass der Katalysator bereits mit niedrigen Edelmetallkonzentrationen eine hervorragende Aktivität in der Oxidation von Wasserstoff und zudem eine ausgezeichnete Regenerierbarkeit aufweist. Die hydrophoben Eigenschaften des in Ausführungsformen verwendeten Zeolithen vom Strukturtyp BEA mit beispielsweise einem SiO₂-Anteil > 98 % bewirken, dass der das Edelmetall enthaltende Zeolith vom Strukturtyp BEA und damit auch der Katalysator von Ausführungsformen hydrophob sind. Dadurch kann erreicht werden, dass sowohl der frische, als auch der länger gelagerte bzw. verwendete Katalysator ohne weitere Maßnahmen einsatzbereit ist. Somit wird die Oxidation von Wasserstoff ohne übermäßige Verzögerung durch den Katalysator selbsttätig eingeleitet und katalysiert, sowie über längere Zeit aufrechterhalten.

Der mit Edelmetall dotierte Zeolith vom Strukturtyp BEA kann in Ausführungsformen der Erfindung sowohl als Schüttgut verwendet werden als auch auf Waben oder Bleche aufgebracht werden. Dadurch und aufgrund seiner niedrigen Edelmetallkonzentrationen ist es möglich, einen Wasserstoffoxidationskatalysator bereitzustellen, der sich auf Grund der niedrigen Edelmetallbeladung durch einen vorteilhaften Beschaffungspreis auszeichnet.

Ferner sind aufgrund der hydrophoben Eigenschaften des in Ausführungsformen eingesetzten Zeolithen vom Strukturtyp BEA keine äußere Beschichtung, z.B. mit siliziumorganischen Verbindungen, oder andere Maßnahmen erforderlich, um den mit Edelmetall beladenen Zeolithen vom Strukturtyp BEA bzw. den Katalysator hydrophob zu machen. Dies hat zur Folge, dass eine Regeneration des Katalysators durch Abbrennen von auf dem Katalysator abgesetzten (organischen) Stoffen ermöglicht wird. Die hydrophoben Eigenschaften des Zeolithen vom Strukturtyp BEA werden in Ausführungsformen der Erfindung nicht durch das Abbrennen beeinträchtig. Außerdem wird die Menge der dabei durch das Abbrennen erzeugten Zersetzungsprodukte im Vergleich zu Katalysatoren, die hydrophobe Beschichtungen aufweisen, deutlich reduziert.

Unter einem Zeolithen bzw. einem Zeolithmaterial wird im Rahmen der vorliegenden Erfindung gemäß einer Definition der International Mineralogical Association (D.S. Coombs et al., Can. Mineralogist, 35, 1997, 1571) eine kristalline Substanz mit einer durch ein Gerüst aus miteinander verbundenen Tetraedern charakterisierten Struktur verstanden. Dabei besteht jedes Tetraeder aus vier Sauerstoffatomen, die ein Zentralatom umgeben, wobei das Gerüst offene Hohlräume in Form von Kanälen und Käfigen enthält, die normalerweise von Wassermolekülen und Extragerüstkationen, welche ausgetauscht werden können, besetzt sind. Die Kanäle des Materials sind dabei groß genug, um Gastverbindungen den Zugang zu erlauben. Bei den hydratisierten Materialien erfolgt die Dehydratisierung meistens bei Temperaturen unterhalb von etwa 400 °C und ist zum größten Teil reversibel.

Das in Ausführungsformen einsetzbare Zeolithmaterial vom Strukturtyp BEA ist ein Silikat oder ein Aluminiumsilikat (aluminiumsilikatischer Zeolith).

Unter dem Begriff "Aluminiumsilikat" wird gemäß der Definition der International Mineralogical Association (D.S. Coombs et al., Can. Mineralogist, 35, 1997, 1571) eine kristalline Substanz mit Raumnetzstruktur der allgemeinen Formel Mⁿ⁺[(AlO₂)ₓ(SiO₂)_{y}]xH₂O verstanden, die aus SiO_{4/2}- und AlO_{4/2}-Tetraedern aufgebaut ist, die durch gemeinsame Sauerstoffatome zu einem regelmäßigen dreidimensionalen Netzwerk verknüpft sind. Das Atomverhältnis von Si/Al = y/x beträgt immer größer/gleich 1 gemäß der sogenannten "Löwenstein-Regel", die das benachbarte Auftreten zweier benachbarter negativ geladener AlO_{4/2}-Tetraeder verbietet. Das Verhältnis SiO₂/Al₂O₃ in einem aluminiumsilikatischen Zeolithen wird auch als Modul bezeichnet.

Der im Katalysator von Ausführungsformen eingesetzte Zeolith vom Strukturtyp BEA ist bevorzugt ein intrinsisch hydrophober Zeolith, d.h. der nicht mit Edelmetall beladene Zeolith ist bereits hydrophob. Dies führt dazu, dass bei der Auswahl eines geeigneten, nach dem Stand der Technik bekannten Dotierverfahrens auch der das Edelmetall enthaltende Zeolith vom Strukturtyp BEA und damit auch der Katalysator von Ausführungsformen ohne weitere Hilfsmittel oder Maßnahmen hydrophob ist. Damit erübrigt sich eine Behandlung des eingesetzten Zeolithen vom Strukturtyp BEA, um dessen hydrophobe Eigenschaften herbeizuführen oder zu verstärken.

In weiteren Ausführungsformen des Katalysators ist der Zeolith vom Strukturtyp BEA ein Aluminiumsilikat und/oder besitzt einen SiO₂-Anteil > 94 Gew.-%, bevorzugt > 98 Gew.-%. Bevorzugt sind Ausführungsformen, in denen aluminiumsilikatische Zeolithe vom Strukturtyp BEA mit einem ungefähren SiO₂-Anteil > 94 Gew.-%, bevorzugt > 98 Gew.-% eingesetzt werden. Die ungefähren SiO₂-Anteile als Funktion des Moduls SiO₂/Al₂O₃ sind:

| SiO₂/Al₂O | Gew.-% SiO₂ |
|---|---|
| 10 | 85 |
| 20 | 92 |
| 30 | 94 |
| 50 | 97 |
| 100 | 98 |
| 150 | 99 |

In Ausführungsformen der Erfindung besitzt der verwendete Zeolith vom Strukturtyp BEA ein SiO₂/Al₂O₃-Verhältnis von bevorzugt > 30, noch bevorzugter > 50, insbesondere > 100. Es hat sich überraschend herausgestellt, dass erst ein derartig hohes SiO₂/Al₂O₃-Verhältnis ausreichend hydrophobe Eigenschaften des mit Edelmetall nicht beladenen und/oder mit Edelmetall beladenen Zeolithen vom Strukturtyp BEA, wie auch des gesamten Katalysators bewirkt. Gemäß einigen Ausführungsformen liegt das SiO₂/Al₂O₃-Verhältnis des verwendeten Zeolithen vom Strukturtyp BEA im Bereich > 100 oder > 140, z.B. zwischen 100 und 250 oder zwischen 130 und 170.

Wird gemäß einer Ausführungsform der Katalysator als Wabe oder Formkörper hergestellt, der mit einem Washcoat, den edelmetallhaltigen Zeolith vom Strukturtyp BEA enthaltend, beschichtet wird, kann der Zeolith 0,1 bis 10 Gew.-%, bevorzugt 0,5 bis 8 Gew.-%, weiter bevorzugt 1 bis 5 Gew.-% Edelmetall enthalten. Im fertigen, als Wabe oder Formkörper ausgeführten Katalysator kann der Gehalt an Edelmetall 0,01 bis 5 g/l, bevorzugt 0,1 bis 3 g/l und besonders bevorzugt 0,3 bis 1,0 g/l betragen. Wird gemäß einer weiteren Ausführungsform der Katalysator als Schüttgut oder schüttbares bzw. schüttfähiges Extrudat hergestellt, kann der Gehalt an Edelmetall 0,01 bis 0,5 Gew.-%, bevorzugt 0,02 bis 0,4 Gew.-% und besonders bevorzugt 0,03 bis 0,3 Gew.-%, bezogen auf den edelmetallhaltigen Zeolithen vom Strukturtyp BEA, betragen. Überraschenderweise besitzt der Katalysator von Ausführungsformen bereits bei derartig geringer Edelmetallbeladung eine hervorragende Aktivität bei der Oxidation von Wasserstoff.

Das in Ausführungsformen verwendete Zeolithmaterial ist vom Strukturtyp Beta (BEA). Die vorstehende Dreibuchstabencode-Nomenklatur entspricht dabei der "IUPAC Commission of Zeolite Nomenclature". Der genannte Zeolith-Strukturtyp ist für die Zwecke der Erfindung notwendig, da mit ihm die gewünschten hydrophoben Eigenschaften und/oder die gewünschte Aktivität bei geringer Edelmetallbeladung des Katalysators verwirklicht werden können.

In Ausführungsformen kann das Edelmetall ausgewählt sein aus der Gruppe bestehend aus Rhodium, Iridium, Palladium, Platin, Ruthenium, Osmium, Gold und Silber oder Kombinationen der genannten Edelmetalle. Diese Edelmetalle zeigen in Ausführungsformen der Erfindung eine besonders erwünschte Aktivität bei der Katalyse der Wasserstoffoxidation.

Die BET-Oberfläche des Katalysators von Ausführungsbeispielen kann 10 bis 1000 m²/g, bevorzugt 300 bis 900 m²/g, besonders bevorzugt 500 bis 700 m²/g betragen und/oder das integrale Porenvolumen des Katalysators kann größer als 100 mm³/g, bevorzugt größer als 200 mm³/g sein. Durch diese Eigenschaften einzeln oder in Kombination kann die katalytische Aktivität des Wasserstoffoxidationskatalysators günstig beeinflusst werden.

In einer bevorzugten Ausführung des Wasserstoffoxidationskatalysators kann sich das Edelmetall im Wesentlichen in den Poren des Zeolithen vom Strukturtyp BEA befinden. Dadurch wird ebenfalls die Oxidation von Wasserstoff begünstigt, da das hoch dispers in den Poren des Zeolithen vom Strukturtyp BEA vorliegende katalysierende Edelmetall besonders leicht mit dem Wasserstoff in Kontakt kommt. Ferner wird dadurch eine Agglomeration der Edelmetallpartikel bei hohen Temperaturen deutlich verlangsamt oder verhindert, die zu einem Verlust an katalytisch wirksamer Oberfläche und damit an Performance führen würde. Im Falle hoher zu oxidierender Wasserstoffmengen bleibt somit der Katalysator wirksam.

Das Edelmetall oder die Edelmetalle kann/können beispielsweise durch Ionenaustausch oder durch Imprägnierung in den Zeolithen vom Strukturtyp BEA eingebracht sein. Die Edelmetalle können sowohl in Form von Edelmetallpartikeln als auch in Form von Edelmetalloxidpartikeln oder Mischphasen aus Metall und Metalloxid im Zeolithen vom Strukturtyp BEA vorliegen. Des Weiteren sind damit die Edelmetallpartikel vorzugsweise XRDamorph und haben damit einen mittleren Durchmesser von weniger als 5 nm.

Gemäß Ausführungsformen des erfindungsgemäßen Katalysators ist es bevorzugt, dass der Katalysator als Vollkatalysator oder als Beschichtungskatalysator vorliegt. Ein Vollkatalysator kann beispielsweise ein extrudierter Formkörper, beispielsweise ein Monolith sein.

In einigen Ausführungsformen kann der Katalysator als Voll-Extrudat oder als Formkörper ausgebildet sein. Der Katalysator kann in weiteren Ausführungsformen einen Träger umfassen, auf dem der Zeolith vom Strukturtyp BEA oder ein den Zeolithen vom Strukturtyp BEA enthaltender Washcoat aufgebracht ist. Außerdem kann der Katalysator und/oder der Träger wabenförmig oder plattenförmig ausgebildet sein. In diesen Fällen kann der Gehalt an Edelmetall 0,01 bis 5 g/l, bezogen auf das Katalysatorvolumen, betragen.

Der Katalysator von Ausführungsbeispielen kann als Schüttgut ausgebildet sein. Der Katalysator kann ferner beispielsweise als Extrudat, als Formkörper oder als mit dem Zeolithen vom Strukturtyp BEA beschichtete Partikel ausgebildet sein. In Ausführungsformen kann der Katalysator zu einem schüttfähigen Material oder Formkörper extrudiert worden sein. Zum Beispiel kann das Schüttgut aus Formkörpern oder Pellets bestehen, die durch Pressen oder Extrusion einer Suspension des mit Edelmetall beladenen Zeolithen vom Strukturtyp BEA erzeugt worden sind. In diesen Fällen kann der Gehalt an Edelmetall 0,01 bis 0,5 Gew.-%, bezogen auf den edelmetallhaltigen Zeolithen vom Strukturtyp BEA, betragen.

Als beispielhafte geometrische Form des Katalysators bzw. der Formkörper sind Kugeln, Ringe, Zylinder, Lochzylinder, Triloben oder Kegel, wobei ein Monolith besonders bevorzugt ist, beispielsweise ein monolithischer Wabenkörper, zu erwähnen.

Ferner kann der Katalysator, wie bereits erwähnt, einen Träger umfassen, auf dem der Zeolith vom Strukturtyp BEA oder ein den Zeolithen enthaltender Washcoat aufgebracht ist. Als Washcoat dient z.B. eine Suspension oder eine Aufschlämmung des Zeolithen vom Strukturtyp BEA in einem Suspensionsmittel, z.B. in Wasser, ggf. unter Zusatz eines bevorzugt silikatischen Binders. Der Zeolith vom Strukturtyp BEA kann beispielsweise durch Beschichten mit einer Suspension bzw. mit dem Washcoat oder durch Aufwachsen aus einer Lösung auf den Träger aufgebracht werden.

Der Katalysator und/oder der Träger kann, wie bereits erwähnt, wabenförmig oder plattenförmig, z.B. als Bleche, ausgebildet sein. Die plattenförmige Variante ermöglicht eine parallele Installation mehrerer Wasserstoffoxidationskatalysatoren im oberen Bereich der Sicherheitsbehälter von Kernkraftwerken, wodurch eine gute Durchströmung der Katalysatoren mit dem Wasserstoffgas erzielt werden kann.

In Verbindung mit einem Washcoat ist es darüber hinaus bevorzugt, wenn der Katalysator, sofern er als Katalysatorwabe ausgeprägt ist, eine Edelmetallbeladung von 0,01 bis 5,0 g/l, mehr bevorzugt 0,1 bis 3,0 g/l, und am meisten bevorzugt 0,3 bis 1,0 g/l, bezogen auf das Volumen des Wabenkörpers enthält.

In Ausführungsformen kann der Träger als Trägermaterial ein Metalloxid umfassen, vorzugsweise ein Titanoxid, ein Ceroxid, ein Aluminiumoxid, ein Zinnoxid, ein Zirkoniumoxid, ein Siliziumoxid, ein Zinkoxid, ein Aluminiumoxid-Siliziumoxid oder ein Magnesiumsilikat oder eine Mischung von zwei oder mehr der vorgenannten Oxide beinhaltet. Es können Träger oder Tragkörper aus keramischem Material Verwendung finden. Häufig handelt es sich bei dem keramischen Material um ein inertes Niedrigoberflächenmaterial wie Cordierit, Mullit, alpha-Aluminiumoxid, Siliciumcarbid oder Aluminiumtitanat. Jedoch kann der eingesetzte Tragkörper auch aus hochoberflächigem Material wie gamma-Aluminiumoxid oder TiO₂ bestehen. Auch Metalle sind als Trägermaterial einsetzbar. Daher sind ebenfalls bevorzugte Träger bzw. Tragkörper beispielsweise aus einem Blech, aus einem beliebigen Metall oder einer Metalllegierung gebildet, die eine Metallfolie oder Sintermetallfolie oder ein Metallgewebe aufweisen und zum Beispiel durch Extrusion, Aufwickeln oder Stapeln hergestellt werden.

Ferner kann es im Falle metallischer Träger von Vorteil sein, den Träger bei bevorzugt 500-900 °C vorzukalzinieren und/oder ihn mit Hilfe von geeigneten, dem Stand der Technik nach bekannten physikalischen, chemischen und/oder elektrochemischen Methoden, z.B. Anätzen mit Säuren, Beschichtung mit Metalloxiden wie Al₂O₃, SiO₂, TiO₂ und Mischungen davon, mit einer oxidischen Haftschicht zu versehen.

Insbesondere kann der Katalysator von Ausführungsformen als Wasserstoffoxidationskatalysator in Kernkraftwerken, Wiederaufbereitungsanlagen oder Brennelementlager verwendet werden, z.B. in Sicherheitsbehältern oder Abklingbecken von Kernkraftwerken oder in Behältern für unbestrahlte, bestrahlte oder abgebrannte Brennelemente, generell in allen Gasräumen über Bereichen, wo Nuklearbrennstoff mit Wasser gekühlt werden muss. Dabei kann der Katalysator von Ausführungsformen in Systemen eingesetzt werden, in denen heiße Oberflächen, z.B. Metalloberflächen, mit Wasser in Berührung kommen.

Die Erfindung entspricht auch einem Verfahren zur Wasserstoffoxidation in Kernkraftwerken, Wiederaufbereitungsanlagen oder Brennelementlager, bei dem Wasserstoff und Sauerstoff mit einem Katalysator nach einem der vorstehenden Ausführungsformen in Kontakt gebracht wird. Dabei werden die oben erläuterten Vorteile erzielt.

Der Katalysator gemäß den Ausführungsbeispielen kann durch Verfahren hergestellt werden, in denen das Edelmetall in ein Zeolithmaterial vom Strukturtyp BEA eingebracht wird. Wie bereits erläutert, kann dabei als Zeolithmaterial ein intrinsisch hydrophober Zeolith vom Strukturtyp BEA, wie er oben beschrieben wurde, verwendet werden.

Ein Beispiel eines Verfahrens zur Herstellung des Katalysators umfasst: a) Einbringen einer Edelmetallverbindung, auch Metallverbindung genannt, in ein Zeolithmaterial vom Strukturtyp BEA; b) Nassvermahlen des mit Metallverbindung beladenen Zeolithmaterials vom Strukturtyp BEA mit einem porösen Trägermaterial; c) Kalzinieren des Gemisches umfassend das beladene Zeolithmaterial vom Strukturtyp BEA und das Trägermaterial; und d) Überführen des Metalls der Metallverbindung, mit der das Zeolithmaterial vom Strukturtyp BEA beladen ist, in seine metallische Form, die aus Metallpartikeln bestehen kann. Dabei kann nach dem Schritt a) und vor dem Schritt b) ein Fixierungsschritt erfolgen, der ein Kalzinieren des mit Metallverbindung beladenen Zeolithmaterials vom Strukturtyp BEA beinhaltet, in welchem das Metall der Metallverbindung an dem Zeolithmaterial vom Strukturtyp BEA fixiert wird. Der Fixierungsschritt kann die Umwandlung des Metalls der Metallverbindung in seine metallische oder oxidische Form oder in metallischoxidische Mischphasen beinhalten. Ferner kann ein Stabilisierungsschritt zur Stabilisierung des geträgerten Metallkatalysators durchgeführt werden. Die Kalzinierung kann beispielsweise bei einer Temperatur von 200 bis 800 °C erfolgen. Auf diese Weise ist ein geträgerter Metallkatalysator erhältlich, umfassend ein poröses Trägermaterial sowie ein Zeolithmaterial vom Strukturtyp BEA, dessen innere Oberfläche mit Metallpartikeln beladen ist.

Unter "geträgerten Katalysatoren", auch Coat- oder Beschichtungskatalysatoren genannt, werden im Rahmen dieser Erfindung Feststoff-Katalysatoren verstanden, die durch Beschichten eines Trägerkörpers mit einer typischerweise porösen Schicht enthaltend die eigentlich katalytisch aktive Spezies hergestellt werden.

Das Einbringen der Edelmetallverbindung, hier auch Metallverbindung genannt, in das Zeolithmaterial bzw. in den Zeolithen jeweils vom Strukturtyp BEA kann zur Erzeugung von Ausführungsformen der Erfindung mittels Feststoffeintausch bzw. Festkörperionenaustausch durchgeführt werden. Beispielsweise erfolgt das Einbringen mittels Vermischen des Zeolithmaterials vom Strukturtyp BEA mit der Metallverbindung im trockenen Zustand in einer Kugelmühle und mit anschließender Temperierung bei höheren Temperaturen, vorzugsweise bei einer Temperatur von 450 bis 650 °C. Alternativ erfolgt das Einbringen der Metallverbindung durch Imprägnieren des Zeolithmaterials vom Strukturtyp BEA mit einer Lösung der Metallverbindung, beispielsweise durch Aufsprühen der Lösung auf das Zeolithmaterial vom Strukturtyp BEA. Das Imprägnieren kann auch in einer Kammer durchgeführt werden, in welcher eine durch eine Besaugung der Kammer bewirkte turbulente Strömung sowie ein Unterdruck herrscht. Gemäß einem anderen Verfahren zur Herstellung von Ausführungsformen erfolgt das Einbringen der Metallverbindung durch Imprägnieren des Zeolithmaterials vom Strukturtyp BEA mit einer Lösung der Metallverbindung mittels der Porefilling-Methode. Dabei wird das Zeolithmaterial vom Strukturtyp BEA mit einer Menge an Lösung in Kontakt gebracht, deren Volumen dem Porenvolumen des eingesetzten Zeolithmaterials vom Strukturtyp BEA entspricht.

Als Edelmetallverbindungen können im Herstellungsverfahren des Katalysators die entsprechenden Nitrate, Acetate, Oxalate, Tartrate, Formeate, Amine, Sulfite, Carbonate, Halogenide oder Hydroxide eingesetzt werden.

Der Katalysator gemäß den Ausführungsformen kann beispielsweise das Zeolithmaterial vom Strukturtyp BEA und einen porösen, bevorzugt SiO₂-haltigen Binder umfassen, wobei der Katalysator einen Anteil an Mikroporen, z.B. mit einem Durchmesser < 1 nm, von mehr als 70 %, bezogen auf das Gesamtporenvolumen des Katalysators, aufweisen kann. Ferner kann das Zeolithmaterial vom Strukturtyp BEA einen Aluminiumanteil von weniger als 2 Mol-% besitzen. Das Gewichtsverhältnis Zeolithmaterial/Binder kann 99:1 bis 50:50 betragen. Als SiO₂-haltigen Binder kann ein reiner SiO₂-Bindereingesetzt werden, z.B. Bindzil 2034 DI-Suspension (Eka-Chemicals AB, Bohus/Schweden).

Ein derartiger Katalysator gemäß den Ausführungsformen ist herstellbar durch a) Einbringen einer Edelmetall-Vorläuferverbindung in ein mikroporöses Zeolithmaterial vom Strukturtyp BEA; b) Kalzinieren des mit der Edelmetall-Vorläuferverbindung beladenen Zeolithmaterials vom Strukturtyp BEA; c) Vermischen des so entstandenen, mit Edelmetall beladenen Zeolithmaterials vom Strukturtyp BEA mit einem porösen SiO₂-haltigen Binder und einem Lösungsmittel; und d) Trocknen und Kalzinieren des Gemisches umfassend das mit der Edelmetallverbindung beladene Zeolithmaterial vom Strukturtyp BEA und den Binder. Dabei kann die in Schritt c) erhaltene Mischung auf einen Träger, auch Tragkörper genannt, aufgebracht oder extrudiert werden. Ferner kann dabei ein Überführen des Metalls der Edelmetallverbindung, mit der das Zeolithmaterial vom Strukturtyp BEA beladen ist, in seine metallische Form durchgeführt werden. Die Umwandlung der Edelmetallverbindung in das entsprechende Edelmetall erfolgt üblicherweise durch thermische Zersetzung, z.B. während einer der Kalzinierungsschritte, oder durch Reduktion, z.B. mittels Wasserstoff.

In einem weiteren Verfahren zur Herstellung des Katalysators gemäß den Ausführungsformen wird ein bimetallischer Katalysator erzeugt. Dieses Beispiel wird anhand der Herstellung eines Pt- und Pd-haltigen Katalysators beschrieben, der erhalten werden kann durch: Imprägnieren eines zeolithischen Trägermaterials vom Strukturtyp BEA mit schwefelfreien Pt- und Pd-Vorläuferverbindungen, Trocknen des imprägnierten zeolithischen Trägermaterials an Luft, und Kalzinieren des imprägnierten und getrockneten zeolithischen Trägermaterials unter Luft. Dabei können als Pt- und Pd-Vorläuferverbindungen Lösungen der Nitrate verwendet werden. Zudem kann das Kalzinieren bei Temperaturen von 350 bis 650 °C erfolgen. Insbesondere kann das Trocknen des imprägnierten zeolithischen Trägermaterials vom Strukturtyp BEA unterhalb des Zersetzungspunktes der Pt- und Pd- Vorläuferverbindungen durchgeführt werden. In diesem Verfahren können desweiteren die folgenden Schritte enthalten sein: Herstellen eines Washcoats aus dem imprägnierten und kalzinierten zeolithischen Trägermaterial vom Strukturtyp BEA, Beschichten eines Trägerkörpers mit dem Washcoat, Trocknen und Kalzinieren des beschichteten Trägerkörpers an Luft. Das Kalzinieren erfolgt vorzugsweise bei Temperaturen von 300 bis 600 °C, mehr bevorzugt bei 400 bis 550 °C. Die Kalzinierdauer beträgt vorzugsweise 1 bis 8 h, mehr bevorzugt 2 bis 6 h und insbesondere etwa 3 bis 5 h.

Auf diese Weise ist ein Katalysator gemäß den Ausführungsformen herstellbar, wobei der Katalysator eine bimetallische katalytisch aktive Zusammensetzung enthaltend Pt und Pd auf einem zeolithischen Trägermaterial vom Strukturtyp BEA enthält. Die bimetallische katalytisch aktive Zusammensetzung kann dabei eine BET-Oberfläche von mehr als 400 m²/g aufweisen.

Wird gemäß einer Ausführungsform die katalytisch aktive Zusammensetzung als Washcoat auf eine Wabe oder einen anderen Formkörper beschichtet, kann die bimetallische katalytisch aktive Zusammensetzung 0,1 bis 10 Gew.-%, bevorzugt 0,5 bis 8 Gew.-%, weiter bevorzugt 1 bis 5 Gew.-% Edelmetall bezogen auf den edelmetallhaltigen Zeolith vom Strukturtyp BEA enthalten. Wird gemäß einer weiteren Ausführungsform der Katalysator als Schüttgut oder schüttbares Extrudat hergestellt, beträgt der Gehalt der bimetallischen katalytischen Zusammensetzung an Edelmetall 0,01 bis 0,5 Gew.-%, bevorzugt 0,02 bis 0,4 Gew.-% und besonders bevorzugt 0,03 bis 0,3 Gew.-% wiederum bezogen auf den edelmetallhaltigen Zeolith vom Strukturtyp BEA. Die bimetallische katalytisch aktive Zusammensetzung kann in beiden vorgenannten Ausführungsformen ein Pd/Pt-Gewichtsverhältnis von 6:1 bis 1:1 besitzen. Pt und Pd kann sich im Katalysator dieses Beispiels ferner im Wesentlichen in den Poren des zeolithischen Trägermaterials vom Strukturtyp BEA befinden und in Aggregaten von < 5 nm vorliegen.

### Messmethoden

### Elementanalytik mit ICP:

Die ICP-AES (Inductively coupled plasma atomic emission spectroscopy) zur Ermittlung der Elementzusammensetzung bzw. des SiO₂/Al₂O₃-Verhältnisses wurde mit dem Gerät ICP Spectro Modula/Arcos durchgeführt. Als Chemikalien wurden dabei eingesetzt: Schwefelsäure 98% p.A., Flusssäure 37% p.A, Salzsäure 37% p.A. Die Probe war fein gemahlen.

Für Si und Al wurden 100 mg Probe in einen 100 ml Plastikbecher eingewogen und mit 1 ml Schwefelsäure und mit 4 ml Flusssäure versetzt. Im Wasserbad wurde 5 Min. lang bei 85°C aufgeschlossen bis eine klare Lösung entstand. Nun wurde temperiert, aufgefüllt und geschüttelt. Alle Elemente wurden am ICP gemessen, ebenso entsprechende Standards. Si wurde mit folgenden Einstellungen gemessen: Wellenlänge: 288, 158 nm. Al wurde gemessen mit folgenden Einstellungen: Wellenlänge: 396, 152 nm.

Für Pt und/oder Pd wurde soviel Probe eingewogen, dass sich ungefähr 3 mg Pt bzw. Pd darin befanden. Anschließend wurden jeweils 6 ml Flusssäure und Salzsäure zugegeben. Nun wurde unter Rühren 30 Min. lang auf 180°C erhitzt, um eine klare Lösung zu erzeugen. Nun wurde temperiert, aufgefüllt und geschüttelt. Alle Elemente wurden am ICP gemessen, ebenso entsprechende Standards. Pt wurde mit folgenden Einstellungen gemessen: Wellenlänge: 214, 423 nm. Für Pd betragen die Wellenlängen: 324, 270 nm.

Alle Standards waren angepasst mit HF und HCl bzw. H₂SO₄. Die Auswertung folgte folgender Berechnung: w(E* in Prozent) = β(E*-Messwert in mg/l) x V(Messkolben in 1) x 100 / m(Einwaage in mg) (E*= jeweiliges Element).

### BET-Oberfläche:

Die Bestimmung erfolgt nach der BET-Methode gemäss DIN 66131; eine Veröffentlichung der BET-Methode findet sich auch in J. Am. Chem. Soc. 60,309 (1938). Die zu bestimmende Probe wurde in einem U-förmigen Quarzreaktor bei 200 °C unter Ar-Atmosphäre getrocknet (F = 50 ml(min) für 1,5 h). Der Reaktor wurde dann auf Raumtemperatur abgekühlt, evakuiert und in ein Dewar-Gefäß mit flüssigem Stickstoff getaucht. Die Stickstoff-Adsorption wurde bei 77 K mit einem RXM 100 Sorptionssystem (Advanced Scientific Design, Inc.) durchgeführt.

### Porenvolumen und Porengröße:

Das integrale Porenvolumen wurde gemäß DIN 66134, einer Bestimmung der Porengrößenverteilung und der spezifischen Oberfläche mesoporöser Feststoffe durch Stickstoffsorption gemäß BJH (Verfahren nach Barrett, Joyner und Halenda) bestimmt.

### Ausführungsbeispiel 1

### 1. Herstellung des edelmetallhaltigen Zeolithpulvers Pt-BEA-150

H-BEA-150-Pulver (SiO₂/Al₂O = 150) wurde mit Pt(NO₃)₂-Lösung verdünnt mit Wasser in einem Mischer der Firma Netzsch mit Butterflyrührer imprägniert und anschließend bei 120 °C für 6 h getrocknet. Danach wurde der Pt-Zeolith bei 550 °C/5 h (Aufheizrate 60 K/h) unter Argon (Durchfluss 50 l/h) kalziniert. Der Pt-Gehalt des Pt-BEA-150-Pulvers betrug 1,8 Gew.-%.

### 2. Herstellung des Washcoats und Wabenbeschichtung

650 g des wie oben erläutert hergestellten Pt-BEA-150-Pulvers wurden mit 432 g Bindzil 2034 DI-Suspension (Eka-Chemicals AB, Bohus/Schweden) zur Erzeugung einer Suspension in 950 g Wasser mit einem Ultra-Turax-Rührer ca. 10 min. dispergiert, bis kein Bodensatz mehr vorhanden war. Anschließend wurde ein 200 cpsi-Corderit-Träger für 30 s in die Suspension getaucht. Nach dem Herausnehmen wurde der mit 30,2 g Washcoat beschichtete Träger mit Druckluft ausgeblasen und bei 150 °C über Nacht getrocknet. Abschließend wurde für 3 h bei 550 °C im Umluftofen kalziniert.

### Ausführungsbeispiel 2

### 1. Herstellung des edelmetallhaltigen Zeolithpulvers PtPd-BEA-150

H-BEA-150-Pulver (SiO₂/Al₂O₃ = 150) wurde mit einer Lösung aus Pt(NO₃)₂ und Pd(NO₃)₂ verdünnt mit Wasser in einem Mischer der Firma Netzsch mit Butterflyrührer imprägniert und anschließend bei 90 °C für 6 h getrocknet. Danach wurde der Pt-Zeolith bei 550 °C/5 h (Aufheizrate 60 K/h) unter Luft kalziniert. Der Pt-Gehalt des Pt-BEA-150-Pulvers betrug 0,8 Gew.-%, der Pd-Gehalt 2,3 Gew.-%.

### 2. Herstellung des Washcoats und Wabenbeschichtung

650 g des wie oben erläutert hergestellten PtPd-BEA-150-Pulvers wurden mit 432 g Bindzil 2034 DI-Suspension (Eka-Chemicals AB, Bohus/Schweden) zur Erzeugung einer Suspension in 950 g Wasser mit einem Ultra-Turax-Rührer ca. 10 min. dispergiert, bis kein Bodensatz mehr vorhanden war. Anschließend wurde ein 200 cpsi-Corderit-Träger für 30 s in die Suspension getaucht. Nach dem Herausnehmen wurde der mit 27,1 g Washcoat beschichtete Träger mit Druckluft ausgeblasen und bei 150 °C über Nacht getrocknet. Abschließend wurde für 3 h bei 550 °C im Umluftofen kalziniert.

### Vergleichsbeispiel

Als Vergleichsbeispiel wurde ein mit Pd dotierter Al₂O₃-Katalysator, nämlich E2051 PGB der Süd-Chemie AG, verwendet. Dabei handelt es sich um einen Schüttgutkatalysator mit einem Partikeldurchmesser von 4-6 mm und einer Pd-Dotierung von 0,4 - 0,5 Gew.-%, der mittels einer aufgebrachten Schicht aus Triethoxy-propyl-silan hydrophobe Eigenschaften besitzt. Die aufgebrachte Schicht aus Triethoxy-propyl-silan ist ab 180°C thermisch zersetzbar.

**Tabelle 1: Katalytische Testbedingungen (Wasserstoffzündtest mit 0,67 % H₂ und 0,1 % H₂O in Luft)**

| | Ausführungsbeispiel 1 | Ausführungsbeispiel 2 | Vergleichsbeispiel |
|---|---|---|---|
| Katalysatorform | 200 cpsi Wabe | 200 cpsi Wabe | Schüttgut mit 4-6 mm Partikeldurchmesser |
| Katalysatorvolumen [ml] | 39,8 | 39,8 | 200 |
| Edelmetalldichte | 0,42 g/l Pt | 0,17 g/l Pt und 0,49 g/l Pd | 2,88 g/l Pd |
| Gesamtstrom des Testgases [l/h] | 920 | 920 | 1500 |
| GHSV [h⁻¹] | 25000 | 25000 | 7500 |
| Lineargeschwindigkeit des Testgases [m/s] | 0,64 | 0,64 | 2,61 |

Die katalytische Aktivität der hergestellten Katalysatoren wurde in einem mit Quarzrohr ausgekleideten Festbettreaktor untersucht. Als Äquivalent zum Umsatz wurde die Temperaturdifferenz zwischen Katalysatoreinlass und Katalysatorauslass mit Hilfe von Thermoelementen gemessen. Beträgt die Differenz zwischen Katalysatoreinlass und Katalysatorauslass < 5 K, gilt die zu katalysierende Reaktion, nämlich die Oxidation von Wasserstoff, als "nicht gezündet". Bei einer Differenz > 40 K gilt die Oxidation von Wasserstoff als "durchgezündet", d.h. angelaufen und eigenständig ablaufend.

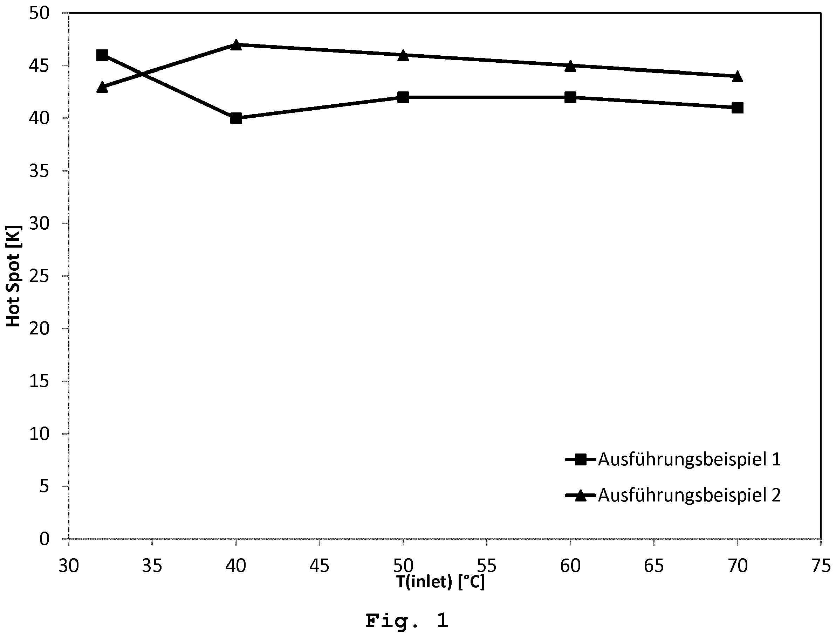

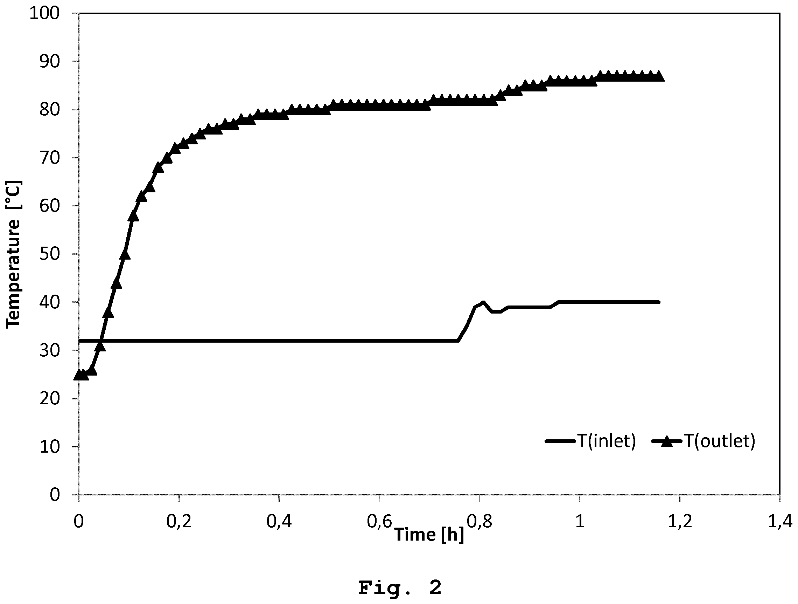

Figur 1 zeigt das Zündverhalten der Ausführungsbeispiele 1 und 2 im Wasserstoffzündtest (0,67 % H₂ und 0,1 % H₂O in Luft), wobei die Differenz zwischen Katalysatorauslass und Katalysatoreinlass, d. h. im vorliegenden Beispiel der "Hot Spot", gegen die Temperatur des Katalysatoreinlasses aufgetragen ist. Figur 2 stellt das Zündverhalten des Vergleichsbeispiels im Wasserstoffzündtest (0,67 % H₂ und 0,1 % H₂O in Luft) dar, wobei die Temperaturen des Katalysatoreinlasses (untere Kurve) und Katalysatorauslasses (obere Kurve) gegen die Zeitdauer ab Testbeginn aufgetragen sind.

In den Figuren 1 und 2 ist zu erkennen, dass sowohl beide Ausführungsbeispiele 1 und 2 als auch das Vergleichsbeispiel bei 32 °C Eintrittstemperatur durchzündeten, obwohl bei den Ausführungsbeispielen 1 und 2 nur 14 % bzw. 23 % der Edelmetallmenge des Vergleichsbeispiels eingesetzt wurden. Die bedeutet, dass der Katalysator gemäß Ausführungsformen bereits mit niedrigen Edelmetallkonzentrationen eine hervorragende Aktivität in der Oxidation von Wasserstoff besitzt und damit zu einer deutlichen Kostenersparnis führt.

Die in den Ausführungsbeispielen 1 und 2 eingesetzten edelmetalldotierten BEA-150-Zeolithe und die entsprechenden Katalysatoren zeichnen sich zudem durch eine hohe Temperaturbeständigkeit aus, was z.B. die hohen Kalzinierungstemperaturen (550°C) anzeigen. Dies gilt insbesondere im Vergleich zum Vergleichsbeispiel, das durch Aufbringen einer bereits bei 180°C thermisch zersetzbaren siliziumorganischen Schicht mit hydrophoben Eigenschaften versehen ist. Daher ist mit dem Katalysator gemäß Ausführungsformen auch eine Regeneration durch Abbrennen organischer Ablagerungen möglich. Auch dies ist ein deutlicher Vorteil gegenüber dem Katalysator des Vergleichsbeispiels, bei dem die Schicht aus einer siliziumorganischen Verbindung beim Abbrennen zersetzt wird und somit die hydrophoben Eigenschaften des Katalysators reduziert werden oder sogar verschwinden.

## Patentansprüche

1. Verwendung eines Katalysators, umfassend einen Zeolithen, der mindestens ein katalytisch aktives Edelmetall oder eine Verbindung davon enthält, wobei der Zeolith ein hydrophober Zeolith vom Strukturtyp BEA ist, als Wasserstoffoxidationskatalysator.

2. Verwendung gemäß Anspruch 1, bei dem der Zeolith ein intrinsisch hydrophober Zeolith ist und/oder ein SiO₂/Al₂O₃-Verhältnis > 10, bevorzugt > 30, noch bevorzugter > 100, besitzt.

3. Verwendung nach einem der vorstehenden Ansprüche, bei dem der Zeolith ein Aluminiumsilikat ist und einen SiO₂-Anteil > 94 Gew.-%, bevorzugt > 98 Gew.-%, besitzt.

4. Verwendung nach einem der vorstehenden Ansprüche, bei dem das Edelmetall ausgewählt ist aus der Gruppe bestehend aus Rhodium, Iridium, Palladium, Platin, Ruthenium, Osmium, Gold und Silber oder Kombinationen der genannten Edelmetalle.

5. Verwendung nach einem der vorstehenden Ansprüche, bei dem die BET-Oberfläche des Katalysators 10 bis 1000 m²/g, bevorzugt 300 bis 900 m²/g, besonders bevorzugt 500 bis 700 m²/g beträgt und/oder das integrale Porenvolumen des Katalysators größer als 100 mm³/g ist.

6. Verwendung nach einem der vorstehenden Ansprüche, bei dem sich das Edelmetall im Wesentlichen in den Poren des Zeolithen befindet.

7. Verwendung nach einem der vorstehenden Ansprüche,
bei dem der Katalysator als Schüttgut ausgebildet ist; und/oder
bei dem der Katalysator als mit dem Zeolithen beschichteter Partikel ausgebildet ist; und/oder
bei dem der Katalysator zu einem schüttfähigen Material extrudiert worden ist.

8. Verwendung nach Anspruch 7, bei dem der Gehalt an Edelmetall 0,01 bis 0,5 Gew.-%, bezogen auf den edelmetallhaltigen Zeolithen, beträgt.

9. Verwendung nach einem der Ansprüche 1 bis 6,
bei dem der Katalysator als Voll-Extrudat oder als Formkörper ausgebildet ist; und/oder
bei dem der Katalysator einen Träger umfasst, auf dem der Zeolith oder ein den Zeolithen enthaltender Washcoat aufgebracht ist; und/oder
bei dem der Katalysator und/oder der Träger wabenförmig oder plattenförmig ausgebildet ist.

10. Verwendung nach Anspruch 9, bei dem der Gehalt an Edelmetall 0,01 bis 5 g/l beträgt.

11. Verwendung nach einem der vorstehenden Ansprüche zur Wasserstoffrekombination in Kernkraftwerken, Wiederaufbereitungsanlagen oder Brennelementlagern.

12. Verwendung nach Anspruch 11, bei der der Katalysator in Systemen eingesetzt wird, in denen heiße Metalloberflächen mit Wasser in Berührung kommen und/oder in denen Nuklearbrennstoff mit Wasser gekühlt wird.

## Claims

1. Use of a catalyst comprising a zeolite which contains at least one catalytically active noble metal or a compound thereof, wherein the zeolite is a hydrophobic zeolite of the BEA structure type, as hydrogen oxidation catalyst.

2. Use according to Claim 1, wherein the zeolite is an intrinsically hydrophobic zeolite and/or has an SiO₂/Al₂O₃ ratio of > 10, preferably > 30, more preferably > 100.

3. Use according to either of the preceding claims, wherein the zeolite is an aluminium silicate and has an SiO₂ content of > 94% by weight, preferably > 98% by weight.

4. Use according to any of the preceding claims, wherein the noble metal is selected from the group consisting of rhodium, iridium, palladium, platinum, ruthenium, osmium, gold and silver and combinations of the noble metals mentioned.

5. Use according to any of the preceding claims, wherein the BET surface of the catalyst is from 10 to 1000 m²/g, preferably from 300 to 900 m²/g, particularly preferably from 500 to 700 m²/g, and/or the integral pore volume of the catalyst is greater than 100 mm³/g.

6. Use according to any of the preceding claims, wherein the noble metal is located essentially in the pores of the zeolite.

7. Use according to any of the preceding claims, wherein the catalyst is configured as loose material; and/or
the catalyst is configured as particles coated with the zeolite; and/or
the catalyst has been extruded to form a pourable material.

8. Use according to Claim 7, wherein the noble metal content is from 0.01 to 0.5% by weight, based on the noble metal-containing zeolite.

9. Use according to any of Claims 1 to 6, wherein the catalyst is configured as solid extrudate or as shaped body; and/or
the catalyst comprises a support onto which the zeolite or a washcoat containing the zeolite has been applied; and/or
the catalyst and/or the support has a honeycomblike or plate-like configuration.

10. Use according to Claim 9, wherein the noble metal content is from 0.01 to 5 g/l.

11. Use according to any of the preceding claims for hydrogen recombination in nuclear power stations, reprocessing plants or fuel element stores.

12. Use according to Claim 11, wherein the catalyst is used in systems in which hot metal surfaces come into contact with water and/or in which nuclear fuel is cooled by means of water.

## Revendications

1. Utilisation d'un catalyseur, comprenant une zéolithe, qui contient au moins un métal noble catalytiquement actif ou un composé de celui-ci, la zéolithe étant une zéolithe hydrophobe du type de structure BEA, en tant que catalyseur d'oxydation de l'hydrogène.

2. Utilisation selon la revendication 1, dans laquelle la zéolithe est une zéolithe intrinsèquement hydrophobe et/ou possède un rapport SiO₂/Al₂O > 10, préférablement > 30, encore plus préférablement > 100.

3. Utilisation selon l'une quelconque des revendications précédentes, dans laquelle la zéolithe est un aluminosilicate et possède une proportion de SiO₂ > 94 % en poids, préférablement > 98 % en poids.

4. Utilisation selon l'une quelconque des revendications précédentes, dans laquelle le métal noble est choisi dans le groupe constitué par le rhodium, l'iridium, le palladium, le platine, le ruthénium, l'osmium, l'or et l'argent ou des combinaisons des métaux nobles mentionnés.

5. Utilisation selon l'une quelconque des revendications précédentes, dans laquelle la surface BET du catalyseur est de 10 à 1 000 m²/g, préférablement 300 à 900 m²/g, particulièrement préférablement 500 à 700 m²/g et/ou le volume de pore intégral du catalyseur est supérieur à 100 mm³/g.

6. Utilisation selon l'une quelconque des revendications précédentes, dans laquelle le métal noble se trouve essentiellement dans les pores de la zéolithe.

7. Utilisation selon l'une quelconque des revendications précédentes, dans laquelle le catalyseur est formé en tant que matériau en vrac ;
et/ou
dans laquelle le catalyseur est formé en tant que particules revêtues par la zéolithe ; et/ou dans laquelle le catalyseur a été extrudé en un matériau pouvant être en vrac.

8. Utilisation selon la revendication 7, dans laquelle la teneur en métal noble est de 0,01 à 0,5 % en poids, par rapport à la zéolithe contenant un métal noble.

9. Utilisation selon l'une quelconque des revendications 1 à 6, dans laquelle le catalyseur est formé en tant qu'extrudat intégral ou en tant que corps moulé ; et/ou
dans laquelle le catalyseur comprend un support, sur lequel la zéolithe ou un revêtement d'imprégnation contenant la zéolithe est appliqué ; et/ou
dans laquelle le catalyseur et/ou le support est formé en forme de nid d'abeille ou en forme de plaque.

10. Utilisation selon la revendication 9, dans laquelle la teneur en métal noble est de 0,01 à 5 g/l.

11. Utilisation selon l'une quelconque des revendications précédentes pour la recombinaison de l'hydrogène dans des centrales nucléaires, dans des usines de retraitement ou des entrepôts d'éléments combustibles.

12. Utilisation selon la revendication 11, dans laquelle le catalyseur est utilisé dans des systèmes, dans lesquels des surfaces métalliques chaudes entrent en contact avec de l'eau et/ou dans lesquels du combustible nucléaire est refroidi avec de l'eau.
